# EUROPÄISCHE PATENTSCHRIFT

(11) **EP 1 907 504 B1**
(45) Veröffentlichungstag und Bekanntmachung des Hinweises auf die Patenterteilung: **30.01.2013**
(21) Anmeldenummer: 06764144.9
(22) Anmeldetag: 12.07.2006
(51) Int. Cl.: C09K 11/61, G01T 1/20

(54) **STRAHLUNGSWANDLER UND VERFAHREN ZUR HERSTELLUNG DES STRAHLUNGSWANDLERS**
RADIATION CONVERTER AND METHOD FOR PRODUCING THE SAME
CONVERTISSEUR DE RAYONNEMENT ET SON PROCEDE DE PRODUCTION

(30) Priorität: 26.07.2005 DE 102005034915
(43) Veröffentlichungstag der Anmeldung: 09.04.2008
(73) Patentinhaber: SIEMENS AKTIENGESELLSCHAFT, 80333 München (DE)
(72) Erfinder: FUCHS, Manfred, 90461 Nürnberg (DE); HAUSEN, Martina, 91166 Georgensgmünd (DE)
(86) Internationale Anmeldenummer: PCT/EP2006/064142
(87) Internationale Veröffentlichungsnummer: WO 2007/012564

(56) Entgegenhaltungen:
- JING T ET AL: "Evaluation of a structured cesium iodide film for radiation imaging purposes" NUCLEAR SCIENCE SYMPOSIUM AND MEDICAL IMAGING CONFERENCE, 1993., 1993 IEEE CONFERENCE RECORD. SAN FRANCISCO, CA, USA 31 OCT.-6 NOV. 1993, NEW YORK, NY, USA,IEEE, 31. Oktober 1993 (1993-10-31), Seiten 1878-1882, XP010119432 ISBN: 0-7803-1487-5
- NAGARKAR V ET AL: "Structured CsI(Tl) Scintillators for X-ray Imaging Applications" IEEE TRANSACTIONS ON NUCLEAR SCIENCE, IEEE SERVICE CENTER, NEW YORK, NY, US, Bd. 45, Nr. 3, Juni 1998 (1998-06), Seiten 492-496, XP011087893 ISSN: 0018-9499
- ANONYMOUS: "Csl(Tl), Csl(Na), Csl(pure) Cesium Iodide Scintillation Material" SAINT-GOBAIN CRYSTALS, [Online] 2004, XP002400809 Gefunden im Internet: URL:http://www.detectors.saint-gobain.com/ Media/Documents/S0000000000000001004/SGC%2 0CsI%20Data%20Sheet%200804.pdf#search=%22C Si%20tl%20rb%22>
- TREFILOVA L N ET AL: "Role of sodium in radiation defect formation in CsI crystals" RADIATION MEASUREMENTS, ELSEVIER, AMSTERDAM, NL, Bd. 33, Nr. 5, Oktober 2001 (2001-10), Seiten 687-692, XP004299814 ISSN: 1350-4487
- BABIN V ET AL: "Luminescence of complicated thallium centres in CsI:Tl" NUCLEAR INSTRUMENTS & METHODS IN PHYSICS RESEARCH, SECTION - A: ACCELERATORS, SPECTROMETERS, DETECTORS AND ASSOCIATED EQUIPMENT, ELSEVIER, AMSTERDAM, NL, Bd. 486, Nr. 1-2, 21. Juni 2002 (2002-06-21), Seiten 486-489, XP004367528 ISSN: 0168-9002

## Beschreibung

Die Erfindung betrifft einen Strahlungswandler nach dem Oberbegriff des Anspruchs 1. Sie betrifft ferner ein Verfahren zur Herstellung eines solchen Strahlungswandlers nach dem Oberbegriff des Anspruchs 5.

Ein solcher Strahlungswandler und ein solches Verfahren sind bekannt aus Jing T. et al.: "Evaluation of a structured cesium iodide film for radiation imaging purposes" NUCLEAR SCIENCE SYMPOSIUM AND MEDICAL IMAGING CONFERENCE, 1993., 1993 IEEE CONFERENCE RECORD. SAN FRANCISCO, CA, USA 31 OCT.-6 NOV. 1993, NEW YORK, NY, USA, IEEE, 31. Oktober 1993 (1993-10-31), Seiten 1878-1882.

Aus Trefilova L.N. et al.: "Role of sodium in radiation defect formation in Csl crystals" RADIATION MEASUREMENTS, ELSEVIER, AMSTERDAM, NL, Bd. 33, Nr. 5, Oktober 2001 (2001-10), Seiten 687-692 ist es bekannt, dass CsJ als Codotierung das Alkalimetall Na enthält. Das Na als Codotierung dient hier zur Erhöhung der Strahlungsstabilität.

Strahlungswandler finden in der bildgebenden medizintechnischen Diagnostik Anwendung. Sie werden insbesondere bei Röntgenbildverstärkern, Röntgendetektoren und Röntgenfilmaufnahmen als Verstärkerfolien, bei Speicherleuchtstoffbildsystemen und bei Kameras eingesetzt. Bei solchen Strahlungswandlern wird hochenergetische Strahlung in einer Szintillator- bzw. Leuchtstoffschicht absorbiert und in Licht gewandelt. Dieses Licht wird mittels Fotodioden oder CCDs detektiert und über eine nachgeschaltete Elektronik ausgewertet.

Sofern zur Herstellung der Leuchtstoffschicht Alkalihalogenide, beispielsweise CsJ:Tl, verwendet werden, liegt ein Emissionsmaximum des erzeugten Lichts nach dem Stand der Technik üblicherweise im Bereich von 540 nm bis 560 nm. Eine maximale Empfindlichkeit von Fotodioden und CCDs liegt dagegen im Bereich von 500 nm bis 520 nm. Das führt zu einem Verlust am Lichtausbeute, welcher durch eine unerwünschte Erhöhung der Dosis kompensiert werden muss.

Aufgabe der Erfindung ist es, die Nachteile nach dem Stand der Technik zu beseitigen. Es soll insbesondere ein Strahlungswandler angegebenen werden, der in Kombination mit herkömmlichen lichtempfindlichen Sensoren eine verbesserte Lichtausbeute ermöglicht. Nach einem weiteren Ziel der Erfindung soll ein Verfahren zur Herstellung eines solchen Strahlungswandlers angegeben werden.

Diese Aufgabe wird durch die Merkmale der Ansprüche 1 und 5 gelöst. Zweckmäßige Ausgestaltungen der Erfindung ergeben sich aus den Merkmalen der Ansprüche 2 bis 4 und 6 bis 8.

Nach Maßgabe der Erfindung ist vorgesehen, dass der Gehalt an Thallium im Bereich von 200 ppm bis 2000 ppm liegt. - Es hat sich überraschenderweise herausgestellt, dass bei einer Verwendung des erfindungsgemäß vorgeschlagenen geringen Gehalts an Thallium eine Verschiebung des Emissionsmaximums zu kleineren Werten sich ergibt. Mit dem vorgeschlagenen Strahlungswandler kann in Kombination mit herkömmlichen lichtempfindlichen Sensoren eine verbesserte Lichtausbeute erreicht werden.

Nach weiterer Maßgabe der Erfindung enthält das CsJ als Codotierung ein Alkalimetall. Das Alkalimetall kann aus der folgenden Gruppe ausgewählt sein: K, Na, Rb. Das Alkalimetall ist in einer Menge von 0,1 Gew.% bis 10,0 Gew.% enthalten. Das Vorsehen der vorgeschlagenen Codotierung bewirkt eine weitere Verschiebung des Emissionsmaximums der Leuchtstoffschicht zu niedrigeren Werten hin.

Zweckmäßigerweise weicht eine Konzentration an Tl in den nadelförmigen Kristallen entlang einer zur Substratoberfläche im Wesentlichen senkrecht verlaufenden z-Achse der Kristalle um nicht mehr als 50% gegenüber einer mittleren Konzentration an Tl ab. Es hat sich gezeigt, dass durch eine möglichst homogene Verteilung von Tl im CsJ-Gitter eine Verschiebung des Emissionsmaximums zu niedrigeren Werten hin gefördert wird.

Mit den erfindungsgemäß vorgeschlagenen Maßnahmen ist es möglich, dass ein Emissionsmaximum der Leuchtstoffschicht im Bereich von 500 nm bis 520 nm liegt. Das Emissionsmaximum kann durch Variation der vorgenannten Parameter selbstverständlich an ein Empfindlichkeitsmaximum des jeweils verwendeten lichtempfindlichen Sensors angepasst werden.

Nach weiterer Maßgabe der Erfindung wird bei einem Verfahren zur Herstellung des erfindungsgemäßen Strahlungswandlers vorgeschlagen, dass die Menge an TlJ so bemessen ist, dass der Gehalt an Thallium in der abgeschiedenen Leuchtstoffschicht im Bereich von 200 ppm bis 2000 ppm liegt und dass des Weiteren als Codotierung ein Alkalihalogenid verdampft auf dem Substrat abgeschieden wird, wobei die Menge an Alkalihalogenid so bemessen ist, dass der Gehalt an Alkalimetall in der abgeschiedenen Leuchtstoffschicht im Bereich von 0,1 Gew.% bis 10,0 Gew.% liegt. - Die jeweils einzusetzende Menge an TlJ hängt von den jeweils gewählten Aufdampfbedingungen ab. Sie kann im Rahmen fachmännischen Könnens in Abhängigkeit der jeweils gewählten Aufdampfbedingungen ermittelt werden.

Als besonders vorteilhaft hat es sich erwiesen, in Abkehr vom Stand der Technik CsJ, TlJ und die Codotierung gleichzeitig zu verdampfen und aus der Dampfphase auf dem Substrat abzuscheiden. Damit kann eine besonders hohe homogene Verteilung von Thallium im CsJ-Gitter und infolgedessen überraschenderweise eine Verschiebung des Emissionsmaximums zu kleineren Werten hin erreicht werden. Zur gleichzeitigen Verdampfung können CsJ und TlJ in zwei separaten Quellen in der Verdampfungseinrichtung vorgesehen sein. Es kann aber auch sein, dass die beiden Stoffe in einer Mischung vorliegen und aus einer einzigen Quelle verdampft werden.

In ähnlicher Weise kann das als Codotierung vorgesehene Alkalihalogenid entweder aus einer separaten Quelle verdampft werden. Es kann aber auch sein, dass das Alkalihalogenid in einer Mischung mit CsJ und/oder TlJ vorliegt und aus einer einzigen Quelle verdampft wird.

Wegen der weiteren verfahrensgemäßen Ausgestaltungen wird auf die Ausgestaltungen der Leuchtstoffschicht verwiesen, die sinngemäß auf das Verfahren übertragen werden können.

Nachfolgend wird ein Ausführungsbeispiel der Erfindung anhand der Zeichnung näher erläutert. Es zeigen:
- Fig. 1: ein Emissionsspektrum einer mit Thallium dotierten ersten CsJ-Schicht,
- Fig. 2: ein Emissionsspektrum einer mit Thallium und Kalium dotierten zweiten CsJ-Schicht und
- Fig. 3: das Emissionsspektrum nach Fig. 1 und Fig. 2 im Vergleich zu einer dritten CsJ:Tl-Schicht nach dem Stand der Technik.

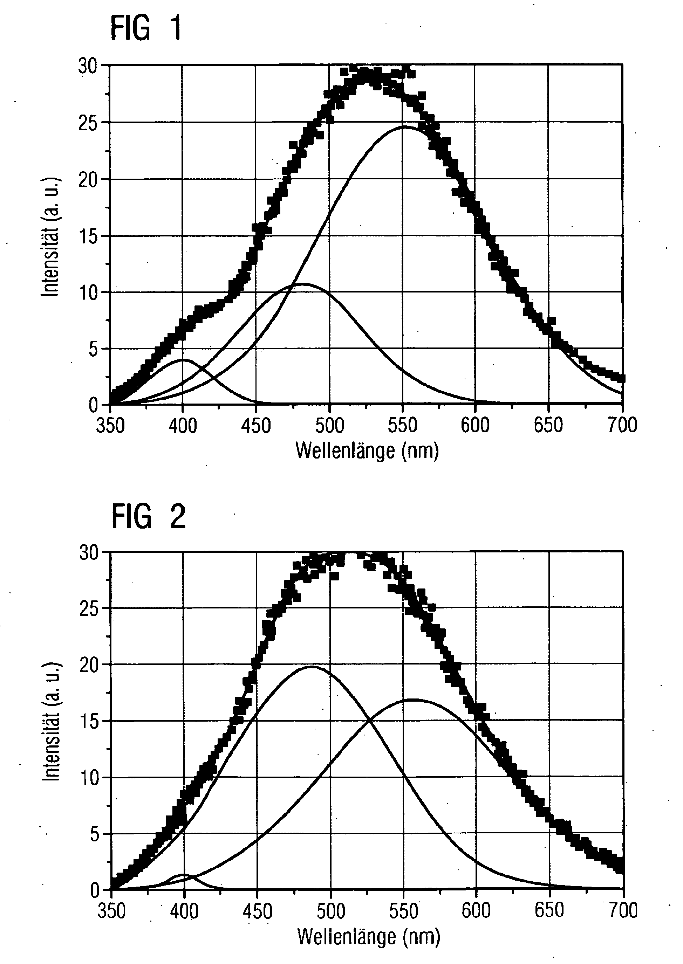

Fig. 1 zeigt ein Emissionsspektrum einer mit Thallium dotierten CsJ-Schicht. Die Herstellung der CsJ:Tl Schicht ist in herkömmlicher Weise durch Aufdampfen erfolgt, wobei allerdings das CsJ und das TlJ gleichzeitig aufgedampft werden. In der hergestellten Schicht hat der Gehalt an Tl durchschnittlich etwa 1500 ppm betragen. Das Tl ist besonders homogen in den nadelförmigen CsJ-Kristallen enthalten gewesen. Der Gehalt an Tl hat in einer z-Achse der Kristalle, welche im Wesentlichen senkrecht zu einer Substratoberfläche steht, weniger als 50% gegenüber der mittleren Konzentration an Tl betragen.

Wie aus Fig. 1 ersichtlich ist, liegt das Emissionsmaximum einer solchermaßen hergestellten Schicht etwa im Bereich von 530 nm.

Das Emissionsspektrum ist mit herkömmlichen Methoden analysiert worden. Wie aus Fig. 1 ersichtlich ist, setzt sich das Emissionsspektrum aus drei Einzelpeaks zusammen, deren Maximum jeweils etwa bei 400 nm, 480 nm und 560 nm liegt.

Fig. 2 zeigt ein Emissionsspektrum einer zweiten CsJ-Schicht, welche mit demselben Gehalt an Thallium wie die in Fig. 1 gezeigte Schicht dotiert gewesen ist. Im Gegensatz zu der in Fig. 1 gezeigten Schicht ist hier bei der Herstellung der Schicht als Codotierung KJ verwendet werden und zwar in einer Menge, so dass Kalium in den hergestellten Kristallen in einem Gehalt von etwa 0,5 Gew.% enthalten gewesen ist.

Wie aus Fig. 2 ersichtlich ist, bewirkt der Zusatz eines Alkalimetalls als Codotierung, insbesondere von Kalium, das der Peak im Bereich von 480 nm höher und der Peak mit Maximum bei 560 nm kleiner werden. Insgesamt ergibt sich damit eine Verschiebung des Emissionsmaximums auf einen Wert im Bereich von 500 nm.

Sofern die Codotierung von Alkali Werte von 0,5 Gew.% übersteigt, hat es sich als zweckmäßig erwiesen, die hergestellten Schichten zusätzlich für etwa 40 bis 80 Minuten bei einer Temperatur von 200°C bis 300°C an Luft, Inertgas oder Vakuum zu tempern. Mit dieser Maßnahme gelingt es, den Peak mit Maximum bei 560 nm zu erniedrigen und damit das Emissionsmaximum zu kleineren Werten hin zu verschieben.

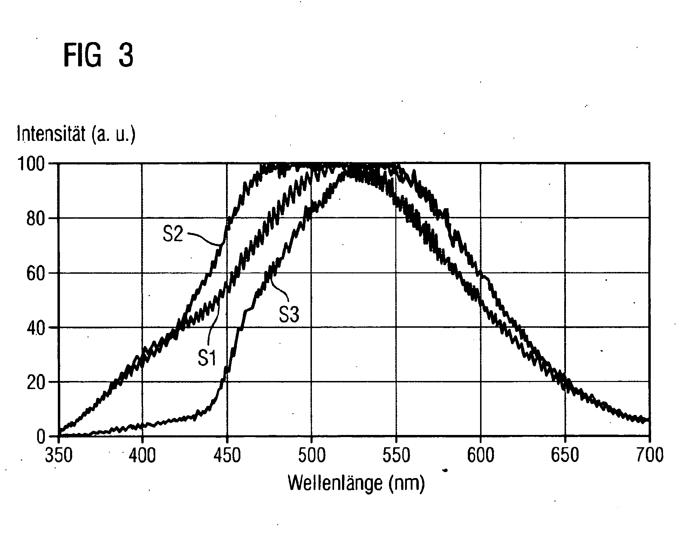

Fig. 3 zeigt nochmals im Vergleich das Emissionsspektrum der in Fig. 1 gezeigten ersten Schicht, der in Fig. 2 gezeigten zweiten Schicht und einer dritten Schicht nach dem Stand der Technik. Wie aus Fig. 3 klar ersichtlich ist, zeigt die mit Thallium und Kalium dotierte zweite Schicht ein für eine Kombination mit herkömmlichen lichtempfindlichen Sensoren besonders geeignetes Emissionsmaximum im Bereich von 500 nm.

## Patentansprüche

1. Strahlungswandler, bei dem auf einem Substrat eine aus nadelförmigen Kristallen gebildete Leuchtstoffschicht aufgebracht ist, wobei die Kristalle aus mit Tl dotiertem CsJ bestehen, wobei der Gehalt an Tl im Bereich von 200 ppm bis 2000 ppm liegt, wobei CsJ als Codotierung ein Alkalimetall enthält, **dadurch gekennzeichnet, dass** das Alkalimetall in einer Menge von 0,1 Gew.% bis 10,0 Gew.% enthalten ist.

2. Strahlungswandler nach Anspruch 1, wobei das Alkalimetall aus der folgenden Gruppe ausgewählt ist: K, Na, Rb.

3. Strahlungswandler nach einem der vorhergehenden Ansprüche, wobei eine Konzentration an Tl in den nadelförmigen Kristallen entlang einer zur Substratoberfläche im Wesentlichen senkrecht verlaufenden z-Achse der Kristalle um nicht mehr als 50% gegenüber einer mittleren Konzentration an Tl abweicht.

4. Strahlungswandler nach einem der vorhergehenden Ansprüche, wobei ein Emissionsmaximum der Leuchtstoffschicht im Bereich von 500 bis 520 nm liegt.

5. Verfahren zur Herstellung eines Strahlungswandlers nach einem der vorhergehenden Ansprüche, wobei die Leuchtstoffschicht durch Abscheiden von CsJ und TlJ aus der Dampfphase auf einem Substrat hergestellt wird, wobei eine Menge an TlJ so bemessen ist, dass der Gehalt an Thallium in der abgeschiedenen Leuchtstoffschicht im Bereich von 200 ppm bis 2000 ppm liegt und wobei des Weiteren als Codotierung ein Alkalihalogenid verdampft auf dem Substrat abgeschieden wird, **dadurch gekennzeichnet, dass** die Menge an Alkalihalogenid so bemessen ist, dass der Gehalt an Alkalimetall in der abgeschiedenen Leuchtstoffschicht im Bereich von 0,1 Gew.% bis 10,0 Gew.% liegt.

6. Verfahren nach Anspruch 5, wobei das Alkalihalogenid aus der folgenden Gruppe ausgewählt ist: Kaliumhalogenid, Natriumhalogenid, Rubidiumhalogenid.

7. Verfahren nach Anspruch 5 oder 6, wobei als Alkalihalogenid ein Alkalijodid verwendet wird.

8. Verfahren nach einem der Ansprüche 5 bis 7, wobei das CsJ, das TlJ und die Codotierung gleichzeitig verdampft und aus der Dampfphase auf dem Substrat abgeschieden werden.

## Claims

1. Radiation converter, in which a luminescent layer formed of needle-type crystals is applied to a substrate, wherein the crystals consist of CsI doped with Tl, wherein the content of Tl lies in the range of 200 ppm to 2000 ppm, wherein CsI contains an alkali metal as codoping, **characterised in that** the alkali metal is contained in a quantity of 0.1% by weight to 10.0% by weight.

2. Radiation converter according to claim 1, wherein the alkali metal is selected from the following group: K, Na, Rb.

3. Radiation converter according to one of the preceding claims, wherein a concentration of Tl in the needle-type crystals along a z-axis of the crystals essentially running at right angles to the substrate surface deviates by no more than 50% compared with an average concentration of Tl.

4. Radiation converter according to one of the preceding claims, wherein an emission maximum of the luminescent layer lies in the range of 500 to 520 nm.

5. Method for producing a radiation converter according to one of the preceding claims, wherein the luminescent layer is produced on a substrate by separating CsI and TlI from the vapour phase, wherein a quantity of TlI is measured so that the content of thallium in the separated luminescent layer lies in the range of 200 ppm to 2000 ppm and wherein an alkali halogenide as a codoping is separated on the substrate using evaporation, **characterised in that** the quantity of alkali halogenide is measured such that the content of alkali metal in the separated luminescent layer lies in the range of 0.1% by weight to 10.0% by weight.

6. Method according to claim 5, wherein the alkali halogenide is selected from the following group: potassium halogenide, sodium halogenide, rubidium halogenide.

7. Method according to claim 5 or 6, wherein an alkali iodide is used as an alkali halogenide.

8. Method according to one of claims 5 to 7, wherein the CsI, the TlI and the codoping are evaporated at the same time and separated from the vapour phase on the substrate.

## Revendications

1. Convertisseur de rayonnement, dans lequel une couche de substance luminescente formée de cristaux en forme d'aiguille est déposée sur un substrat, les cristaux étant en CsI dopé par du Tl, la teneur en Tl allant de 200 ppm à 2000 ppm, CsI contenant comme codopage un métal alcalin, **caractérisé en ce que** le métal alcalin est contenu en une quantité de 0,1 % en poids à 10,0 % en poids.

2. Convertisseur de rayonnement suivant la revendication 1, dans lequel le métal alcalin est choisi dans le groupe suivant : K, Na, Rb.

3. Convertisseur de rayonnement suivant l'une des revendications précédentes, dans lequel une concentration de Tl dans les cristaux en forme d'aiguille s'écartent, le long d'un axe z des cristaux s'étendant sensiblement perpendiculairement à la surface du substrat, de pas plus de 50 % par rapport à une concentration moyenne de Tl.

4. Convertisseur de rayonnement suivant l'une des revendications précédentes, dans lequel un maximum d'émission de la couche de substance luminescente va de 500 à 520 nm.

5. Procédé de production d'un convertisseur de rayonnement suivant l'une des revendications précédentes, dans lequel la couche de substance luminescente est produite par dépôt en phase vapeur de CsI et de TlI sur un substrat, une quantité de TlI étant telle que la teneur en thallium de la couche luminescente déposée va de 200 ppm à 2000 ppm et dans lequel en outre on dépose, comme codopage sur le substrat, un halogénure de métal alcalin à l'état de vapeur, **caractérisé en ce que** la quantité d'halogénure de métal alcalin est telle que la teneur en métal alcalin de la couche luminescente déposée va de 0,1 % en poids à 10,0 % en poids.

6. Procédé suivant la revendication 5, dans lequel l'halogénure de métal alcalin est choisi dans le groupe suivant : halogénure de potassium, halogénure de sodium, halogénure de rubidium.

7. Procédé suivant la revendication 5 ou 6, dans lequel on utilise un iodure de métal alcalin comme halogénure de métal alcalin.

8. Procédé suivant la revendication 5 à 7, dans lequel on évapore simultanément le CsI, le TlI et le codopage et on les dépose en phase vapeur sur le substrat.
